(19) Europäisches Patentamt European Patent Office Office européen des brevets

(11) EP 3 184 921 A1

(12) EUROPEAN PATENT APPLICATION
published in accordance with Art. 153(4) EPC

(43) Date of publication:
28.06.2017 Bulletin 2017/26

(51) Int Cl.:
F24F 11/02 (2006.01)     G06Q 50/16 (2012.01)

(21) Application number: 15833511.7

(22) Date of filing: 14.08.2015

(86) International application number:
PCT/JP2015/072972

(87) International publication number:
WO 2016/027753 (25.02.2016 Gazette 2016/08)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA

(30) Priority: 21.08.2014 JP 2014168346

(71) Applicant: Kabushiki Kaisha Toshiba
Minato-ku
Tokyo 105-8001 (JP)

(72) Inventor: KOBAYASHI, Hisashi
Tokyo 105-8001 (JP)

(74) Representative: Moreland, David
Marks & Clerk LLP
Aurora
120 Bothwell Street
Glasgow G2 7JS (GB)

(54) AIR-CONDITIONING CONTROL DEVICE, AIR-CONDITIONING CONTROL METHOD, AND AIR-CONDITIONING CONTROL PROGRAM

(57) An air-conditioning controller according to an embodiment controls an air-conditioning unit, and includes a schedule generator unit and a memory unit. The schedule generator unit generates an operation schedule defining a start time of a preliminary operation and a load of the air-conditioning unit in the preliminary operation. The preliminary operation causes a room temperature of room adjusted by the air-conditioning unit to be substantially equal to a predetermined set temperature. The start time and the load are set to lower electricity expenses incurred by the preliminary operation based on an amount of energy consumed in the preliminary operation and electricity unit price information. The memory unit is configured to store the operation schedule.

FIG.1

**Description**

TECHNICAL FIELD

Embodiments according to the present invention relate to an air-conditioning controller, an air-conditioning control method, and an air-conditioning control program.

BACKGROUND ART

Conventional air-conditioning apparatuses are manually controlled to be turned on and off and to set a temperature by means of a remote controller individually installed in each room of a building. If a central monitoring system such as a BEMS (Building Energy Management System) is used, the central monitoring system performs centralized control of the air-conditioning of each room.

Users of a room having an air-conditioning apparatus that controls air-conditioning may desire that the air-conditioning in the room be already in an appropriate state when the users start using the room. Therefore, the air-conditioning apparatus may sometimes be controlled to perform a pre-cooling operation or pre-heating operation (hereinafter they may be collectively called "preliminary operation") that is adjusted to be appropriate for the usage start time. Conventionally, a scheduling function of the air-conditioning apparatus is used in the preliminary operation to start air-conditioning at a preset time in order to have an appropriate air-conditioning state by the time the room is used.

However, the preliminary operation utilizing the conventional scheduling function only controls the air-conditioning so that the temperature of the room may be appropriately adjusted by the time the room starts to be used, and no attention has been paid to the air-conditioning control in consideration of the electricity expenses.

[Patent Document 1]
Japanese Patent Laid-Open Publication No. S63-50620 A
[Patent Document 2]
Japanese Patent Laid-Open Publication No. 2012-37222 A

SUMMARY OF THE INVENTION

Technical Problem

An air-conditioning controller, an air-conditioning control method, and an air-conditioning control program are proposed, which are capable of suppressing electricity costs incurred by an air-conditioning preliminary operation for controlling the air-conditioning to be appropriately working at the time a room starts to be used.

Solution to Problem

An air-conditioning controller according to an embodiment is configured to control an air-conditioning unit, and includes a schedule generator unit and a memory unit. The schedule generator unit is configured to generate an operation schedule defining a start time of a preliminary operation for causing a room temperature of room adjusted by the air-conditioning unit to be substantially equal to a predetermined set temperature and a load of the air-conditioning unit in the preliminary operation, the start time and the load being set to lower electricity expenses incurred by the preliminary operation based on an amount of energy consumed in the preliminary operation and electricity unit price information. The memory unit stores the operation schedule.

BRIEF DESCRIPTION OF DRAWINGS

[FIG. 1]

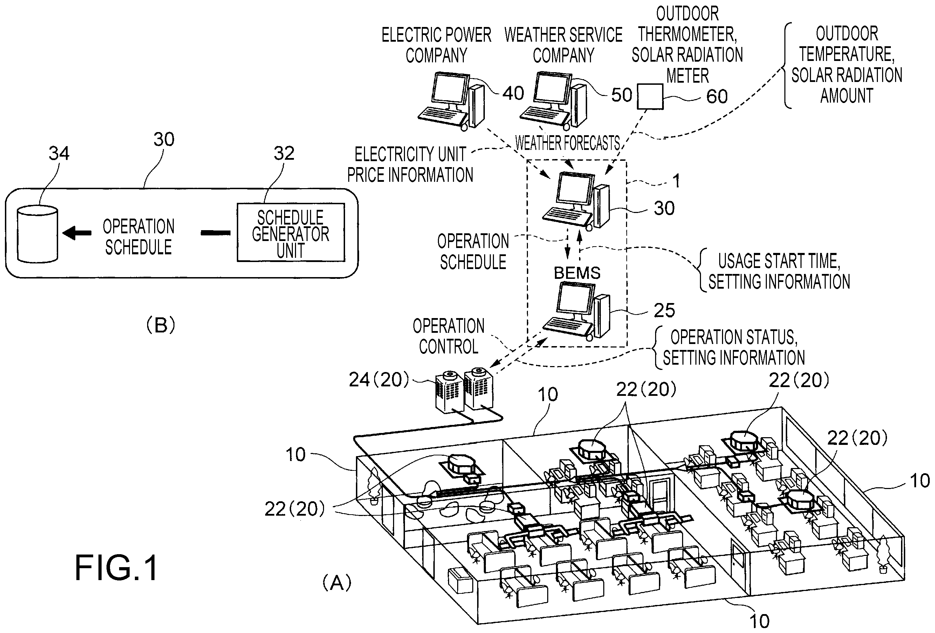

FIG. 1 is a schematic diagram illustrating an example of an air-conditioning controller 1 and a configuration of air-conditioning units 20 and the like according to a first embodiment.
[FIG. 2]

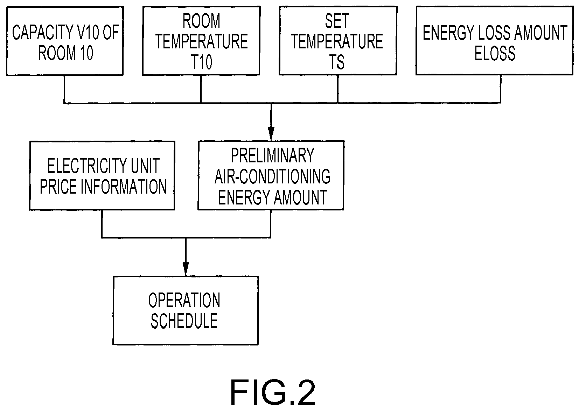

FIG. 2 is a diagram illustrating an example of the manner an operation schedule is generated by an air-conditioning operation control apparatus 30 according to the first embodiment.
[FIG. 3]

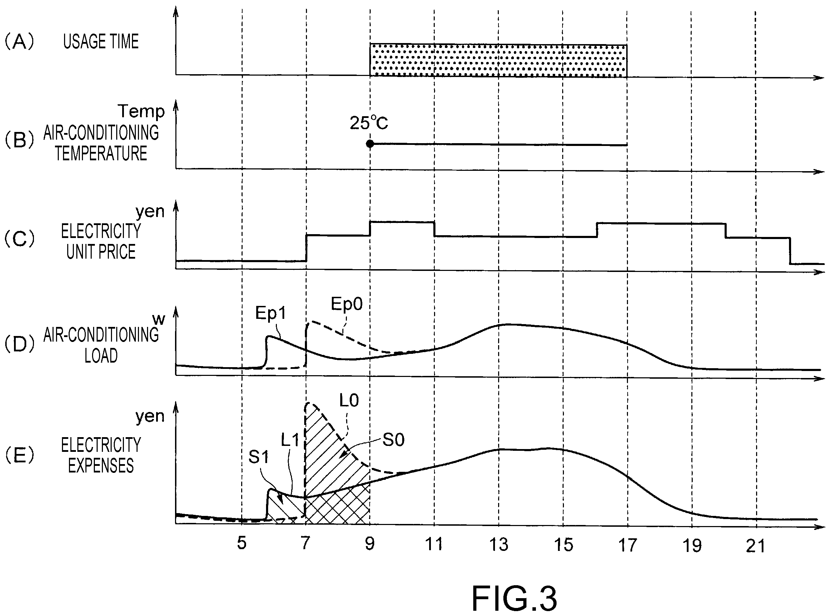

FIG. 3 shows graphs illustrating temporal changes in electricity unit price, load of the air-conditioning unit 20, electricity expenses, and the like.

[FIG. 4]

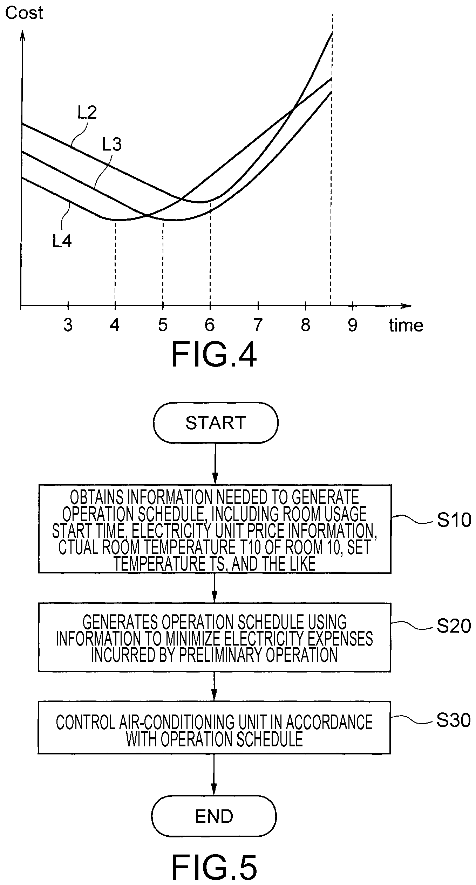

FIG. 4 is a graph showing the relationship between the preliminary operation start time and the electricity expenses for the preliminary operation.

[FIG. 5]

FIG. 5 is a flow chart showing an example of an air-conditioning control method using the air-conditioning operation control apparatus 30 according to the first embodiment.

[FIG. 6]

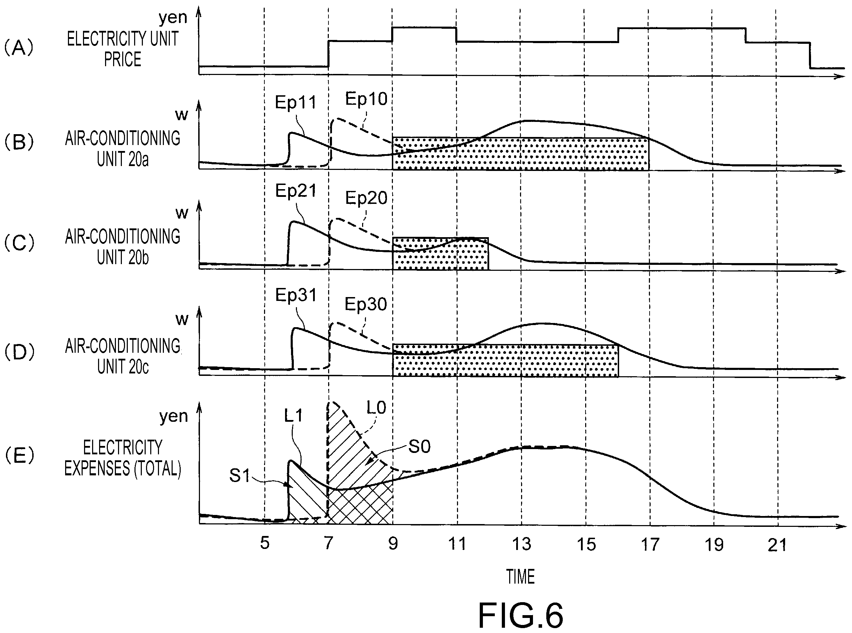

FIG. 6 shows graphs illustrating temporal changes in electricity unit price, loads of air-conditioning units 20a to 20c, and electricity expenses.

[FIG. 7]

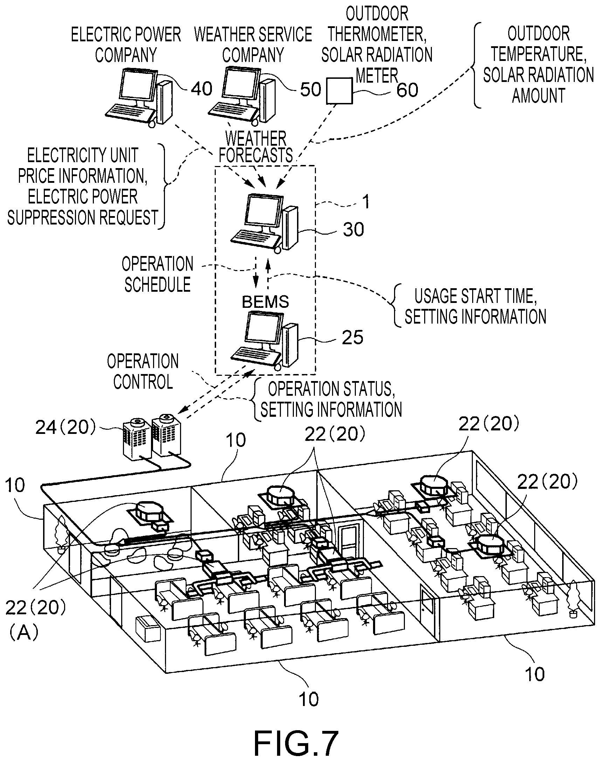

FIG. 7 is a schematic diagram showing an example of an air-conditioning controller 1 and a configuration of air-conditioning units 20 and the like according to a third embodiment.

[FIG. 8]

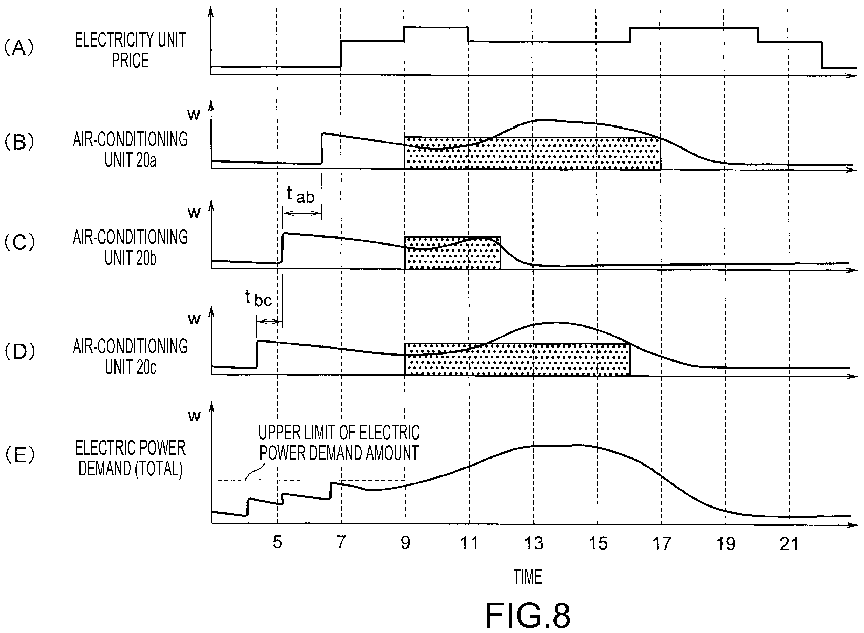

FIG. 8 shows graphs illustrating temporal changes in electricity unit price, loads of air-conditioning units 20a to 20c, and electric power demand amount.

[FIG. 9]

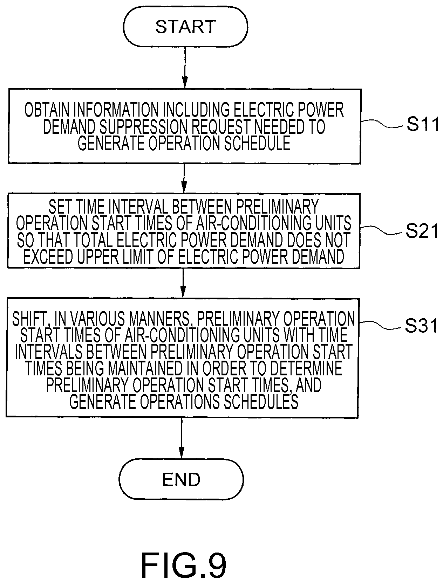

FIG. 9 is a flow chart showing an example of an air-conditioning control method using the air-conditioning operation control apparatus 30 according to the third embodiment.

[FIG. 10]

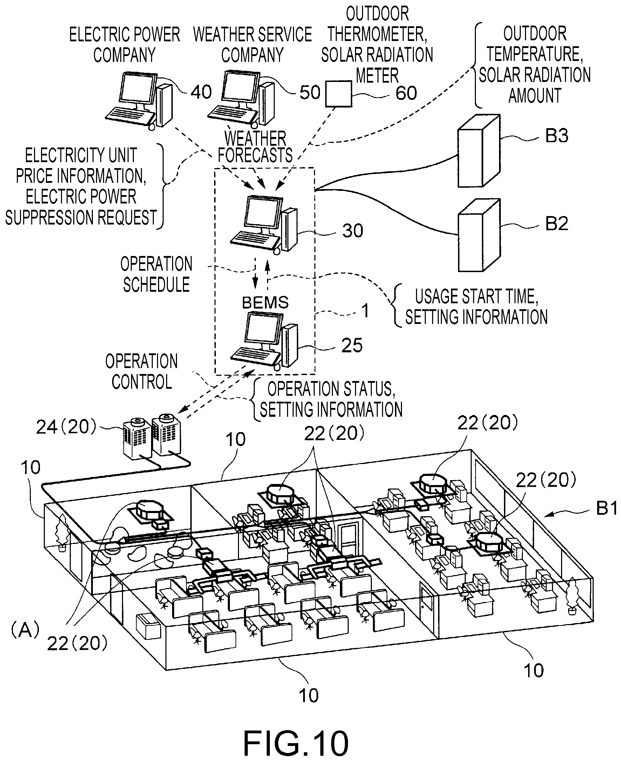

FIG. 10 is a schematic diagram illustrating an example of an air-conditioning controller 1 and a configuration of air-conditioning units 20 and the like according to a fourth embodiment.

DESCRIPTION OF EMBODIMENTS

Hereinafter, embodiments of the present invention will be described with reference to the accompanying drawings. The present invention is not limited by the embodiments.

(First Embodiment)

FIG. 1(A) is a schematic diagram showing an example an air-conditioning controller 1 and a configuration of air-conditioning units 20 and the like according to a first embodiment. FIG. 1(B) is a schematic diagram showing a configuration of an air-conditioning monitor apparatus 30 according to the first embodiment.

The air-conditioning controller 1 controls the air-conditioning units 20 installed in rooms 10 of a structure such as a building or a factory. The air-conditioning unit 20 includes a blower (indoor unit) 22 and a compressor (outdoor unit) 24.

The air-conditioning controller 1 includes an air-conditioning operation control apparatus 25 and an air-conditioning operation control apparatus 30.

The air-conditioning operation control apparatus 25 and the air-conditioning operation control apparatus 30 are capable of communicating with each other, and are connected to each other with a physically disconnectable communication line. The air-conditioning operation control apparatus 30 is a server or a computer capable of creating an operation schedule and transmitting the operation schedule to the air-conditioning operation control apparatus 25. The air-conditioning operation control apparatus 25 controls the air-conditioning unit 20 based on the operation schedule received from the air-conditioning operation control apparatus 30. Furthermore, the air-conditioning operation control apparatus 25 transmits to the air-conditioning operation control apparatus 30 the operation status and the setting information of the air-conditioning unit 20 received from the air-conditioning unit 20 and the usage start time set by the user. The air-conditioning operation control apparatus 25 is, for example, a computer or a server used for the building energy management in a BEMS. The operation status of the air-conditioning unit 20 is an actual operation status (operation load) of the air-conditioning unit 20. The setting information of the air-conditioning unit 20 concerns information of the operation load of the air-conditioning unit 20 including the set temperature, the air-conditioning intensity, and the set air volume.

As shown in FIG. 1(B), the air-conditioning operation control apparatus 30 includes a schedule generator unit 32 and a memory unit 34. The schedule generator unit 32 generates an operation schedule defining the preliminary operation start time and the load of the air-conditioning unit 20 in the preliminary operation. The generated operation schedule is transmitted to the air-conditioning operation control apparatus 25 as described above. The preliminary operation starts the air-conditioning of the room 10 before the user starts using the room 10 to make the temperature of the room 10 substantially equal to a predetermined set temperature by the usage start time of the room 10. For example, in summer, the preliminary operation is a pre-cooling operation, and in winter, the preliminary operation is a pre-heating operation. In the operation schedule, the operation time (for example, the operation start time and the operation stop time) and the operation load (for example, the air-conditioning intensity) of the air-conditioning units 20 are determined in advance. The air-conditioning operation control apparatus 25 controls the air-conditioning unit 20 in accordance with the operation schedule. In this embodiment, the operation schedule means a schedule of the preliminary operation. Therefore, in the operation schedule, the operation time of the preliminary operation of the air-conditioning unit 20 from a point before the use of the room 10 to the usage start time, and the operation load are determined in advance.

The schedule generator unit 32 may be, for example, a processing unit such as a CPU. The schedule generator unit 32 defines the start time of the preliminary operation and the load of the air-conditioning unit 20 in the preliminary operation based on the amount of energy consumed in the preliminary operation and the electricity unit price information such that the electricity expenses for the preliminary operation is lowered, and generates an operation schedule based on them. In this embodiment, the operation schedule is generated in such a manner that a target low value of the electricity expenses calculated based on the amount of energy consumed in the preliminary operation and the electricity unit price information is minimized. However, if other factors that have an influence on the electricity expenses need to be considered, the operation schedule is generated in a manner that the electricity expenses as a whole is lowered or minimized. The memory unit 34 stores the operation schedule generated by the schedule generator unit 32. The memory unit 34 may also store previously generated operation schedules as past information. The memory unit 34 also stores a program needed to generate the operation schedule (such as an air-conditioning control program). The memory unit 34 may be a storage device such as an HDD (Hard Disk Drive), or an SSD (Solid State Drive).

The air-conditioning operation control apparatus 30 and the air-conditioning operation control apparatus 25 may be separate computers as shown in FIG. 1(A), or a single computer having both the functions of the air-conditioning operation control apparatus 30 and of the air-conditioning operation control apparatus 25. The air-conditioning operation control apparatus 30 may be connected to a plurality of air-conditioning operation control apparatuses 25 so that the air-conditioning operation control apparatus 30 may perform centralized control of the air-conditioning operation control apparatuses 25. Of course, the air-conditioning operation control apparatus 30 may generate and apply a different operation schedule to each of the air-conditioning control apparatuses 25.

The air-conditioning operation control apparatus 25 is capable of controlling the air-conditioning units 20 or receiving signals indicating the operation status (ON/OFF, air-conditioning intensity, etc.) from each air-conditioning unit 20 via a network (not shown).

Furthermore, the air-conditioning operation control apparatus 30 is capable of being connected to a wide area network, which is not shown, to communicate with, for example, an electric power company 40, a weather service company 50, a thermometer, or a solar radiation meter 60. This allows the air-conditioning operation control apparatus 30 to obtain electricity unit price information from the electric power company 40, weather forecast information from weather service company 50, outside temperature from the thermometer, and the amount of solar radiation from the solar radiation meter 60. The weather forecast information, the outside temperature, and the solar radiation amount is taken into account into the amount of energy loss, which will be described later.

FIG. 2 is a diagram showing an example of how the operation schedule is generated by the air-conditioning operation control apparatus 30 according to the first embodiment. The operation schedule is determined based on the amount of energy consumed in the preliminary operation and the electricity unit price information to minimize the electricity expenses incurred by the preliminary operation. The amount of energy consumed in the preliminary operation (hereinafter, "preliminary air-conditioning energy amount") is calculated based on conditions such as the capacity of the room 10, the temperature of the room 10, the set temperature, and the amount of energy loss. The temperature of the room 10 is obtained from the air-conditioning unit 20 via the air-conditioning operation control apparatus 25.

The amount of energy loss is the amount of energy diffused from the room 10 to the outside through the outer wall during the preliminary operation. The amount of energy loss is calculated in advance, using the difference in temperature between the room 10 and the outside air, the actual weather, the forecast weather, the solar radiation amount, and the like. The difference in temperature between the room 10 and the outside air, the actual weather, the forecast weather, the solar radiation amount, and the like are converted to an energy amount based on past information or statistics, and added to the amount of energy loss. For example, if the difference in temperature between the room 10 and the outside air is considerably large, the air-conditioning operation control apparatus 30 increases the amount of energy loss. Furthermore, if the actual weather or forecast weather indicates a sunny day in summer, or if the solar radiation amount is great in summer, the air-conditioning operation control apparatus 30 increases the amount of energy loss. If the actual weather or forecast weather indicates a cloudy or snowy day in winter, or if the solar radiation amount is low in winter, the air-conditioning operation control apparatus 30 increases the amount of energy loss. In the cases opposite to the above, the air-conditioning operation control apparatus 30 may decrease the amount of energy loss. The degree of increase or decrease of the amount of energy loss may be appropriately set statistically by referring to the past information.

The electricity expenses incurred during the preliminary operation may be calculated in the following manner. For example, the capacity of the room 10 is assumed to be V10, the actual room temperature of the room 10 is assumed to be t10, the set temperature is assumed to be ts, and the amount of energy loss is assumed to be Eloss. Also, the amount of energy needed to change the temperature of air in a unit volume by a unit temperature is assumed to be E0, and the preliminary operation time is assumed to be T. In this case, the preliminary air-conditioning energy Ep may be substantially expressed by Formula 1. Of course, the preliminary air-conditioning energy Ep may be calculated more accurately by adding other factors to Formula 1.

$$Ep=(E0{\times}V10{\times}(|ts\text{-}t0|)+Eloss){\times}T \quad \text{(Formula 1)}$$

On the other hand, the electricity unit price information is provided by the electric power company 40, and stored in the memory unit 34 in advance. Alternatively, the air-conditioning operation control apparatus 30 may obtain the electricity unit price information from the electric power company 40 via a wide area network as shown in FIG. 1(A).

The schedule generator unit 32 calculates the electricity expenses incurred by the preliminary operation by multiplying the preliminary air-conditioning energy Ep by the electricity unit price.

If a time zone charge calculation system or a real-time pricing system is introduced to the electricity expenses calculation system, the electricity unit price changes depending on the electric power demand or the electricity supply-demand balance. Therefore, the electricity unit price may change on a time zone basis. In this case, if a preliminary operation is performed in a time zone with a high electricity unit price, the electricity expenses incurred by the preliminary operation increase. The air-conditioning unit 20 consumes a large amount of energy when the air-conditioning operation starts. Furthermore, people's lifestyles overlap to some extent with respect to time. Therefore, preliminary operations performed in rooms 10 in time zones in which the demand for electric power is high, i.e., time zone of high electricity unit prices, may naturally overlap in time.

Accordingly, the air-conditioning operation control apparatus 30 generates a preliminary operation schedule based on the electricity unit price information in this embodiment.

FIGs. 3(A) to 3(E) are graphs indicating temporal changes in the electricity unit price, the load of the air-conditioning unit 20, the electricity expenses, and so on. In this embodiment, the room 10 is assumed to be used from 9 AM, as shown in FIG. 3(A). Thus, the usage start time of the room 10 is 9 AM. Furthermore, as shown in FIG. 3(B), the set temperature is 25°C. Therefore, the air-conditioning operation control apparatus 30 performs a preliminary operation in which the air-conditioning unit 20 is controlled to cause the temperature in the room 10 to be 25°C at the usage start time, 9 AM.

As shown in FIG. 3(C), the electricity unit price is set to be low at night and early in the morning, and high in the morning and evening.

FIG. 3(D) shows the load of the air-conditioning unit 20. The line Ep0 indicates the load of the air-conditioning unit 20 when the preliminary operation is started at 7 AM. The line Ep1 indicates the load of the air-conditioning unit 20 when the preliminary operation is started at 6 AM. The load may be expressed using either electric power (watt) or amount of heat (joule).

When the preliminary operation is started at 7 AM, the air-conditioning operation control apparatus 30 operates the air-conditioning unit 20 with a relatively high load in order to cause the temperature of the room 10 to reach the set temperature, 25°C, by the usage start time, 9 AM. As shown in FIG. 3(C), the electricity unit price after 7 AM is higher than that before 7 AM. The electricity expenses are calculated by multiplying the load of the air-conditioning unit 20 by the electricity unit price. Therefore, the electricity expenses become higher as indicated by L0 in FIG. 3(E). In particular, at the time the preliminary operation is started, the load of the air-conditioning unit 20 is high, and therefore the electricity expenses are very high.

If the preliminary operation is started at 6 AM, the air-conditioning operation control apparatus 30 operates the air-conditioning unit 20 with a relatively low load to cause the temperature of the room 10 to reach the set temperature, 25°C, by the usage start time, 9 AM. Furthermore, the electricity unit price from 6 AM to 7 AM is lower than that after 7 AM, as shown in FIG. 3(C). Therefore, the electricity expenses are relatively low as indicated by L1 in FIG. 3(E). In particular, the electricity expenses are set to be very low at the time the preliminary operation is started.

The total electricity expenses for the preliminary operation can be obtained by integrating the electricity expenses from the preliminary operation start time to the usage start time. Therefore, the total electricity expenses for the preliminary operation started at 7 AM correspond to the area S0, and the total electricity expenses for the preliminary operation started at 6 AM correspond to the area S1. The area S1 is obviously smaller than the area S0. Therefore, it can be understood that the electricity expenses for the preliminary operation are lower in the case where the preliminary operation is started at 6 AM than in the case where the preliminary operation is started at 7 AM. The length of the preliminary operation started from 6 AM is longer than that of the preliminary operation started at 7 AM. However, the preliminary operation is preferably started at 6 AM rather than 7 AM to keep low the electricity expenses.

After 9 AM, which is the usage start time, the air-conditioning operation control apparatus 30 controls the air-conditioning unit 20 in a regular manner. Therefore, there is substantially no difference between Ep0 and Ep1 in FIG. 3(D). Furthermore, there is substantially no difference between L0 and L1 in FIG. 3(E).

In FIGs. 3(A) to 3(E), the electricity expenses in the case where the preliminary operation start time is 7 AM is compared with the electricity expenses in the case where the preliminary operation start time is 6 AM. The electricity expenses (areas S0, S1) vary further if the start time of the preliminary operation is changed, as will be described with reference to FIG. 4.

FIG. 4 is a graph showing a relationship between the preliminary operation start time and the electricity expenses incurred by the preliminary operation. The lateral axis represents the preliminary operation start time, and the longitudinal axis represents the electricity expenses incurred by the preliminary operation. The curved lines L2 to L4 differ depending on the operation load of the air-conditioning unit 20. The operation load of the air-conditioning unit 20 corresponding to the curved line L2 is set to be relatively high, the operation load of the air-conditioning unit 20 corresponding to the curved line L3 is lower than that corresponding to the curved line L2, and the operation load of the air-conditioning unit 20 corresponding to the curved line L4 is lower than that corresponding to the curved line L3.

As shown in FIG. 4, the electricity expenses incurred by the preliminary operation change depending on the preliminary operation start time. For example, with respect to the curved line L2, if the preliminary operation start time is set to be 6 AM, the electricity expenses incurred by the preliminary operation can be minimized. With respect to the curved line L3, if the preliminary operation start time is set to be 5 AM, the electricity expenses incurred by the preliminary operation can be minimized. With respect to the curved line L4, if the preliminary operation start time is set to be 4 AM, the electricity expenses incurred by the preliminary operation can be minimized.

Comparison among the lowest values of L2 to L4 indicates that the lowest value of L3 is the lowest. Therefore, the schedule generator unit 32 generates an operation schedule in which the air-conditioning unit 20 is operated with the operation load corresponding to L3, and the preliminary operation start time is set to be 6 AM. Thus, the schedule generator unit 32 is capable of generating an operation schedule setting the preliminary operation start time and the operation load of the air-conditioning unit 20 to minimize the electricity expenses incurred by the preliminary operation. The above example should be considered to an example only. The embodiment is not limited to the above example.

FIG. 5 is a flow chart showing an example of an air-conditioning control method using the air-conditioning operation control apparatus 30 according to the first embodiment. In the air-conditioning control method according to this embodiment, the air-conditioning operation control apparatus 30 generates an operation schedule, and controls the air-conditioning unit 20 in accordance with the operation schedule.

The capacity V10 of the room 10, the amount of energy loss Eloss, and the amount of energy E0 needed for changing the temperature of air with a unit volume by a unit degree are set in advance, and stored in the memory unit 20.

First, the air-conditioning operation control apparatus 30 obtains information needed to generate an operation schedule, including the room usage start time, the electricity unit price information, the actual room temperature t10 of the room 10, the set temperature ts, and the like (S10). The room usage start time and the set temperature ts may be set by a user. The electricity unit price information may be obtained from an electric power company, and the actual room temperature t10 may be obtained from a thermometer.

Then, the schedule generator unit 32 generates an operation schedule with the above-described information to minimize the electricity expenses incurred by the preliminary operation (S20). At this time, the schedule generator unit 32 calculates the preliminary operation start time and the operation load of the air-conditioning unit 20 in the preliminary operation so that the electricity expenses incurred by the preliminary operation is minimized based on the amount of preliminary air-conditioning energy consumed in the preliminary operation and the electricity unit price information, as has been described with reference to FIGs. 3 and 4. As a result, the operation schedule is optimized so that the electricity expenses incurred by the preliminary operation are minimum.

Thereafter, the air-conditioning operation control apparatus 30 transmits the operation schedule to the air-conditioning operation control apparatus 25. The air-conditioning operation control apparatus 25 controls the air-conditioning unit 20 in accordance with the operation schedule (S30). Thus, the air-conditioning unit 20 can bring the room temperature to the set temperature by the usage start time of the room 10 with the electricity expenses incurred by the preliminary operation being minimum. As a result, the electricity costs incurred by the preliminary operation may be minimized, and the user may use the room 10 without feeling discomfort when entering the room 10.

(Modification)

If the electricity unit price changes in accordance with the actual electricity supply-demand status as in a real-time pricing system, etc., the air-conditioning operation control apparatus 30 may predict the electricity unit price based on archived electricity unit price information data when generating the operation schedule. For example, the electric power demand may be predicted to some extent from conditions such as weather forecasts and outdoor temperatures. Accordingly, the air-conditioning operation control apparatus 30 may predict the electricity unit price based on the predicted electric power demand. The air-conditioning operation control apparatus 30 may generate the operation schedule to minimize the electricity expenses incurred by the preliminary operation using the predicted electricity unit price.

In more detail, the air-conditioning operation control apparatus 30 refers to the past information such as the past weather data, the past outdoor temperatures, the past electricity unit price information, and the amount of energy consumed in past preliminary operations, stored in the memory unit 34 as a database, to predict the electricity unit price and the amount of energy consumed in the preliminary operation from the current weather data and the current outdoor temperature. For example, if past information corresponding to the current weather data and outer temperature are stored in the memory unit 34, the schedule generator unit 32 generates an operation schedule using the electricity unit price and the energy consumed in the preliminary operation corresponding to the past information. Of course, no past information corresponding to the current weather data and outdoor temperatures may be stored in the memory unit 34. In such a case, the air-conditioning operation control apparatus 30 retrieves past information that is the closest to the current weather and outdoor temperature data, and uses the electricity unit price and the amount of energy consumed in the preliminary operation corresponding to such past information. Thus, the air-conditioning operation control apparatus 30 may use the electricity unit price and the amount of energy consumed in the preliminary operation predicted from the past information in generating an operation schedule to minimize the electricity expenses incurred by the preliminary operation.

(Second Embodiment)

FIGs. 6(A) to 6(E) are graphs indicating temporal changes of the electricity unit price, the operation loads of the air-conditioning units 20a to 20c, and the electricity expenses in a second embodiment. In the second embodiment, the air-conditioning controller 1 controls a plurality of air-conditioning units 20a to 20c. The air-conditioning operation control apparatus 30 generates an operation schedule shared by the air-conditioning units 20a to 20c, or an operation schedule for each of the air-conditioning units 20a to 20c.

In the second embodiment as well, the room 10 is assumed to be used from 9 AM as shown in FIG. 3(A). Furthermore, as shown in FIG. 3(B), the set temperature is 25°C, and the air-conditioning operation control apparatus 30 controls the air-conditioning unit 20 to perform the preliminary operation so that the temperature in the room 10 is 25°C at the usage start time, which is 9 AM.

As shown in FIG. 6(A), the electricity unit price is set to be low at night and early in the morning, and high in the morning and evening.

FIG. 6(B) shows the operation load of the air-conditioning unit 20a, FIG. 6(C) shows that of the air-conditioning unit 20b, and FIG. 6(D) shows that of the air-conditioning unit 20c. The line Ep10 indicates the operation load of the air-conditioning unit 20a when the preliminary operation starts at 7 AM. The line Ep11 indicates the operation load of the air-conditioning unit 20a when the preliminary operation starts at 6 AM. The line Ep20 indicates the operation load of the air-conditioning unit 20b when the preliminary operation starts at 7 AM. The line Ep21 indicates the operation load of the air-conditioning unit 20b when the preliminary operation starts at 6 AM. The line Ep30 indicates the operation load of the air-conditioning unit 20c when the preliminary operation starts at 7 AM. The line Ep31 indicates the operation load of the air-conditioning unit 20c when the preliminary operation starts at 6 AM.

The air-conditioning operation control apparatus 30 integrates the sum of the electricity expenses of the air-conditioning units 20a to 20c from the preliminary operation start time to the usage start time. The air-conditioning operation control apparatus 30 may obtain the total electricity expenses incurred by the preliminary operation in this manner. The total electricity expenses incurred by the preliminary operation started at 7 AM are represented by the area S0 in FIG. 6(E), and the total electricity expenses incurred by the preliminary operation started at 6 AM are represented by the area S1 in FIG. 6(E).

As has been described with reference to FIG. 4, the schedule generator unit 32 sets the preliminary operation start time and the load of the air-conditioning units 20 so as to minimize the total electricity expenses incurred by the preliminary operation. Therefore, the air-conditioning operation control apparatus 30 may generate an operation schedule shared by the air-conditioning units 20a to 20c to minimize the total electricity expenses incurred by the preliminary operation.

After calculating the electricity expenses of each of the air-conditioning units 20a to 20c, the air-conditioning operation control apparatus 30 may calculate the preliminary operation start time and the load of each air-conditioning units 20 to minimize the electricity expenses incurred by the preliminary operation for each of the air-conditioning units 20a to 20c. Thus, the air-conditioning operation control apparatus 30 is capable of generating a different operation schedule for each of the air-conditioning units 20a to 20c to minimize the electricity expenses incurred by the preliminary operation. In this case, the preliminary operation start times of the air-conditioning units 20a to 20c may differ.

The other features and the operation of the second embodiment may be the same as those of the first embodiment. As a result, the second embodiment may have the same effect as the first embodiment.

(Third Embodiment)

FIG. 7 is a schematic diagram showing an example of an air-conditioning controller 1 and a configuration of air-conditioning units 20 etc. according to a third embodiment. In the third embodiment, the air-conditioning controller 1 receives an electric power demand suppression request (such as demand response) from an electric power company 40. In this case, an upper limit value of the electric power demand is set to meet the electric power demand suppression request. The air-conditioning operation control apparatus 30 generates an operation schedule minimizing the electricity expenses incurred by the preliminary operation within a range below the upper limit value of the electric power demand. The other features of the third embodiment may be the same as those of the first embodiment.

FIGs. 8(A) to 8(E) are graphs showing temporal changes in the electricity unit price, the loads of the air-conditioning units 20a to 20c, and the electric power demand. FIG. 9 is a flow chart showing an example of an air-conditioning control method using the air-conditioning operation control apparatus 30 according to the third embodiment.

In the third embodiment, the air-conditioning operation control apparatus 30 generates an operation schedule corresponding to each of the air-conditioning units 20a to 20c so that the electric power load peaks of the air-conditioning units 20a to 20c do not overlap.

First, the air-conditioning controller 1 obtains information needed to generate an operation schedule. For example, the air-conditioning controller 1 receives an electric power demand suppression request apart from the room usage start time, the electricity unit price information, the actual room temperature $t10$ of the room 10, and the set temperature $ts$ (S11).

Next, the air-conditioning operation control apparatus 30 sets the time interval $t_{ab}$ between the preliminary operation start time of the air-conditioning unit 20a and the preliminary operation start time of the air-conditioning unit 20b, and the time interval $t_{bc}$ between the preliminary operation start time of the air-conditioning unit 20b and the preliminary operation start time of the air-conditioning unit 20c so that the total electric power demand does not exceed the upper limit of the electric power demand (S21). As a result, the electric power demand peaks at the preliminary operation start time of the air-conditioning units 20a to 20c do not coincide as shown in FIGs. 8(B) to 8(D). Therefore, the total electric power demand may be prevented from exceeding the upper limit of the electric power demand, as shown in FIG. 8(E).

Furthermore, the air-conditioning operation control apparatus 30 shifts, in various manners, the preliminary operation start times of the air-conditioning units 20a to 20c with the time interval $t_{ab}$ between the preliminary operation start times of the air-conditioning units 20a and 20b and the time interval $t_{bc}$ between the preliminary operation start times of the air-conditioning units 20b and 20c being maintained, and determines the preliminary operation start time for each of the air-conditioning units 20a to 20c in order to minimize the electricity expenses incurred by the preliminary operation (S31). As a result, the air-conditioning operation control apparatus 30 is able to generate operation schedules corresponding to the respective air-conditioning units 20a to 20c.

Thus, if an electric power demand suppression request is transmitted from the electric power company, the air-conditioning operation control apparatus 30 according to the third embodiment appropriately deals with the electric power demand suppression request and generates an operation schedule to minimize the electricity expenses incurred by the preliminary operation without loss of comfort.

(Fourth Embodiment)

FIG. 10 is a schematic diagram showing an example of an air-conditioning controller 1 and a configuration of air-conditioning units 20 and the like according to a fourth embodiment. The air-conditioning controller 1 according to the fourth embodiment is in communicative connection with air-conditioning units of a plurality of buildings B1 to B3 located in more than one area via a wide area network. Air-conditioning units are installed in each of the buildings B1 to B3. The air-conditioning operation control apparatus 25 may be shared by the buildings B1 to B3, or may individually control each of the buildings B1 to B3.

The air-conditioning operation control apparatus 30 is shared by the buildings B1 to B3, and controlled by, for example, an energy supply-demand management company. The other features of the air-conditioning operation control apparatus 30 are the same as the corresponding ones of the air-conditioning operation control apparatus 30 according to the first embodiment.

The air-conditioning operation control apparatus 30 according to the fourth embodiment generates an operation schedule to minimize the electricity expenses incurred by the preliminary operation of the air-conditioning units of the buildings B1 to B3 based on the amount of energy consumed in the preliminary operation of the air-conditioning units of the buildings B1 to B3 and the electricity unit price information. In this case, replacing the air-conditioning units 20a to 20c according to the second embodiment with the buildings B1 to B3, the air-conditioning operation control apparatus 30 may generate an operation schedule for the buildings B1 to B3. Thus, with respect to the preliminary operation for the buildings B1 to B3, the fourth embodiment has the same effect as the effect obtained in the second embodiment.

When an electric power demand suppression request is sent from the electric power company, the air-conditioning operation control apparatus 30 may generate an operation schedule for the buildings B1 to B3, which appropriately deals with the electric power demand suppression request, by replacing the air-conditioning units 20a to 20c in the third embodiment with the buildings B1 to B3. Thus, with respect to the preliminary operation for the buildings B1 to B3, the fourth embodiment has the same effect as the effect obtained in the third embodiment.

The fourth embodiment enables electric power consumers to use electric power at relatively low prices. Furthermore, peaks of electricity consumed by the electric power consumers may be shifted, which may reduce the electric power demand peaks. As a result of the reduction of electric power demand peaks, the electric power companies may decrease the investments in facilities.

At least part of an operation control method using the air-conditioning controller 1 according to this embodiment may be carried out by hardware resources, or software resources. In the case of software resources, a program for carrying out at least part of the functions of the data processing method may be stored in a recording medium such as a flexible disk or CD-ROM, and read by a computer to be executed. The recording medium is not limited to a detachable one such as a magnetic disk or an optical disk, but may be a fixed type recording medium such as a hard disk drive or a memory. Furthermore, a program for carrying out at least part of the functions of the data processing method may be distributed over communication lines (including wireless communications) such as the Internet. The program may be encrypted, modulated, or compressed, and distributed via wired or wireless communication lines such as the Internet, or as a recorded medium.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

**Claims**

1.   An air-conditioning controller controlling an air-conditioning unit, comprising:

a schedule generator unit generating an operation schedule defining a start time of a preliminary operation and a load of the air-conditioning unit in the preliminary operation, the preliminary operation causing a room temperature of a room adjusted by the air-conditioning unit to be substantially equal to a set temperature, the start time and the load being set to lower electricity expenses incurred by the preliminary operation based on an amount of energy consumed in the preliminary operation and electricity unit price information; and
a memory unit storing the operation schedule.

2.   The system according to claim 1, wherein the amount of energy consumed in the preliminary operation is determined based on a difference between the room temperature and the set temperature, a capacity of the room, and an amount of energy loss of energy diffused from the room to the outside during the preliminary operation.

3.   The system according to claim 1 or 2, wherein an electricity unit price included in the electricity unit price information is set for a time zone.

4.   The system according to claim 2, wherein the schedule generator unit predicts the amount of energy loss based on outside temperature or forecast weather.

5.   The system according to any one of claims 1 to 4, wherein:

the memory unit stores past information including past weather data, past outdoor temperatures, past electricity unit price information, and energy amounts consumed in past preliminary operations; and
the schedule generator unit predicts the amount of energy consumed in the preliminary operation based on the past information, and generates the operation schedule to lower the electricity expenses incurred by the preliminary operation.

6.   The system according to any one of claims 1 to 5, wherein, if an upper limit is set for an electric power demand, the schedule generator unit generates the operation schedule such that the amount of energy consumed by the preliminary operation is equal to or less than the upper limit of the electric power demand.

7. The system according to any one of claims 1 to 6, wherein:

the air-conditioning controller is in communicative connection with air-conditioning units of a plurality of buildings in a plurality of areas via a wide area network; and
the schedule generator unit generates the operation schedule based on the amount of energy consumed in the preliminary operations of the air-conditioning units in the buildings and the electricity unit price information to lower electricity expenses incurred by the preliminary operations of the air-conditioning units in the buildings.

8. An air-conditioning control method using an air-conditioning controller controlling an air-conditioning unit, comprising:

generating an operation schedule defining a start time of a preliminary operation and a load of the air-conditioning unit in the preliminary operation, the preliminary operation causing a room temperature of a room adjusted by the air-conditioning unit to be substantially equal to a predetermined set temperature, the start time and the load being set to lower electricity expenses incurred by the preliminary operation based on an amount of energy consumed in the preliminary operation and electricity unit price information.

9. The method according to claim 8, the amount of energy consumed in the preliminary operation is determined based on a difference between the room temperature and the set temperature, a capacity of the room, and an amount of energy loss of energy diffused from the room to the outside during the preliminary operation.

10. The method according to claim 8, wherein an electricity unit price included in the electricity unit price information is set for a time zone.

11. The method according to claim 9, wherein the amount of energy loss is predicted based on outside temperature or forecast weather.

12. The method according to claim 8, wherein the operation schedule is generated by predicting the amount of energy consumed in the preliminary operation based on the past information, to lower the electricity expenses incurred by the preliminary operation.

13. The method according to claim 8, wherein, if an upper limit is set for an electric power demand, the operation schedule is generated such that the amount of energy consumed by the preliminary operation is equal to or less than the upper limit of the electric power demand.

14. An air-conditioning control program adapted to cause an air-conditioning controller managing an air-conditioning unit to generate an operation schedule defining a start time of a preliminary operation and a load of the air-conditioning unit in the preliminary operation, the preliminary operation causing a room temperature of a room adjusted by the air-conditioning unit to be substantially equal to a predetermined set temperature, the start time and the load being set to lower electricity expenses incurred by the preliminary operation based on an amount of energy consumed in the preliminary operation and electricity unit price information.

15. The program according to claim 14, wherein the amount of energy consumed in the preliminary operation is determined based on a difference between the room temperature and the set temperature, a capacity of the room, and an amount of energy loss of energy diffused from the room to the outside during the preliminary operation.

16. The program according to claim 14, wherein a electricity unit price included in the electricity unit price information is set by time zones.

17. The program according to claim 15, wherein the amount of energy loss is predicted based on outside temperature or forecast weather.

18. The program according to claim 14, wherein the operation schedule is generated by predicting the amount of energy consumed in the preliminary operation based on the past information, to lower the electricity expenses incurred by the preliminary operation.

19. The program according to claim 14, wherein, if an upper limit is set for an electric power demand, the operation schedule is generated such that the amount of energy consumed by the preliminary operation is equal to or less than the upper limit of the electric power demand.

FIG.1

(B)

OPERATION SCHEDULE ← SCHEDULE GENERATOR UNIT

34  30  32

ELECTRIC POWER COMPANY  WEATHER SERVICE COMPANY  OUTDOOR THERMOMETER, SOLAR RADIATION METER  OUTDOOR TEMPERATURE, SOLAR RADIATION AMOUNT

40  50  60

ELECTRICITY UNIT PRICE INFORMATION  WEATHER FORECASTS

1  30

OPERATION SCHEDULE  BEMS  USAGE START TIME, SETTING INFORMATION

25

OPERATION CONTROL  OPERATION STATUS, SETTING INFORMATION

24(20)  22(20)  22(20)  22(20)

10  22(20)  10  10  10  10

(A)

| CAPACITY V10 OF ROOM 10 | ROOM TEMPERATURE T10 | SET TEMPERATURE TS | ENERGY LOSS AMOUNT ELOSS |
|---|---|---|---|

| ELECTRICITY UNIT PRICE INFORMATION | PRELIMINARY AIR-CONDITIONING ENERGY AMOUNT |
|---|---|

OPERATION SCHEDULE

# FIG.2

(A)    USAGE TIME

(B) AIR-CONDITIONING TEMPERATURE

Temp

25°C

(C) ELECTRICITY UNIT PRICE

yen

(D) AIR-CONDITIONING LOAD

W

Ep1    Ep0

(E) ELECTRICITY EXPENSES

yen

L1    L0
S1          S0

5    7    9    11    13    15    17    19    21

FIG.3

Cost

L2
L3
L4

3    4    5    6    7    8    9    time

# FIG.4

START

↓

OBTAINS INFORMATION NEEDED TO GENERATE
OPERATION SCHEDULE, INCLUDING ROOM USAGE
START TIME, ELECTRICITY UNIT PRICE INFORMATION,
CTUAL ROOM TEMPERATURE T10 OF ROOM 10, SET
TEMPERATURE TS, AND THE LIKE — S10

↓

GENERATES OPERATION SCHEDULE USING
INFORMATION TO MINIMIZE ELECTRICITY EXPENSES
INCURRED BY PRELIMINARY OPERATION — S20

↓

CONTROL AIR-CONDITIONING UNIT IN ACCORDANCE
WITH OPERATION SCHEDULE — S30

↓

END

# FIG.5

(A) ELECTRICITY UNIT PRICE

(B) AIR-CONDITIONING UNIT 20a

(C) AIR-CONDITIONING UNIT 20b

(D) AIR-CONDITIONING UNIT 20c

(E) ELECTRICITY EXPENSES (TOTAL)

FIG.6

ELECTRIC POWER COMPANY

WEATHER SERVICE COMPANY

OUTDOOR THERMOMETER, SOLAR RADIATION METER 60

OUTDOOR TEMPERATURE, SOLAR RADIATION AMOUNT

40

50

WEATHER FORECASTS

ELECTRICITY UNIT PRICE INFORMATION, ELECTRIC POWER SUPPRESSION REQUEST

1

30

OPERATION SCHEDULE

BEMS

USAGE START TIME, SETTING INFORMATION

25

OPERATION CONTROL

OPERATION STATUS, SETTING INFORMATION

24(20)

10

22(20)

22(20)

10

22(20)

22(20)
(A)

10

10

10

FIG.7

(A) ELECTRICITY UNIT PRICE

(B) AIR-CONDITIONING UNIT 20a

(C) AIR-CONDITIONING UNIT 20b

(D) AIR-CONDITIONING UNIT 20c

(E) ELECTRIC POWER DEMAND (TOTAL)

$t_{ab}$

$t_{bc}$

UPPER LIMIT OF ELECTRIC POWER DEMAND AMOUNT

TIME

FIG.8

START

OBTAIN INFORMATION INCLUDING ELECTRIC POWER
DEMAND SUPPRESSION REQUEST NEEDED TO
GENERATE OPERATION SCHEDULE — S11

SET TIME INTERVAL BETWEEN PRELIMINARY
OPERATION START TIMES OF AIR-CONDITIONING UNITS
SO THAT TOTAL ELECTRIC POWER DEMAND DOES NOT
EXCEED UPPER LIMIT OF ELECTRIC POWER DEMAND — S21

SHIFT, IN VARIOUS MANNERS, PRELIMINARY OPERATION
START TIMES OF AIR-CONDITIONING UNITS WITH TIME
INTERVALS BETWEEN PRELIMINARY OPERATION START
TIMES BEING MAINTAINED IN ORDER TO DETERMINE
PRELIMINARY OPERATION START TIMES, AND
GENERATE OPERATIONS SCHEDULES — S31

END

FIG.9

ELECTRIC POWER COMPANY

WEATHER SERVICE COMPANY

OUTDOOR THERMOMETER, SOLAR RADIATION METER

OUTDOOR TEMPERATURE, SOLAR RADIATION AMOUNT

40

50

60

WEATHER FORECASTS

ELECTRICITY UNIT PRICE INFORMATION, ELECTRIC POWER SUPPRESSION REQUEST

B3

B2

30

OPERATION SCHEDULE

BEMS

1

USAGE START TIME, SETTING INFORMATION

25

OPERATION CONTROL

OPERATION STATUS, SETTING INFORMATION

24(20)

10

22(20)

22(20)

22(20)

10

B1

(A)

22(20)

10

10

10

FIG.10

## INTERNATIONAL SEARCH REPORT

| International application No. |
|---|
| PCT/JP2015/072972 |

| A. CLASSIFICATION OF SUBJECT MATTER |
|---|
| F24F11/02(2006.01)i, G06Q50/16(2012.01)i |

According to International Patent Classification (IPC) or to both national classification and IPC

| B. FIELDS SEARCHED |
|---|
| Minimum documentation searched (classification system followed by classification symbols)<br>F24F11/02, G06Q50/16 |

Documentation searched other than minimum documentation to the extent that such documents are included in the fields searched

| Jitsuyo Shinan Koho | 1922–1996 | Jitsuyo Shinan Toroku Koho | 1996–2015 |
| Kokai Jitsuyo Shinan Koho | 1971–2015 | Toroku Jitsuyo Shinan Koho | 1994–2015 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2014-96946 A  (Toshiba Corp.),<br>22 May 2014 (22.05.2014),<br>paragraphs [0020] to [0158]; fig. 1 to 11<br>& US 2014/0188295 A1<br>paragraphs [0042] to [0246]; fig. 1 to 11<br>& WO 2014/073556 A1    & CN 103917954 A | 1-19 |
| Y | JP 2011-179717 A  (Fujitsu General Ltd.),<br>15 September 2011 (15.09.2011),<br>paragraphs [0011] to [0036]; fig. 1 to 4<br>(Family: none) | 1-19 |
| Y | JP 2014-134330 A  (Mitsubishi Electric Corp.),<br>24 July 2014 (24.07.2014),<br>paragraphs [0048] to [0049]<br>(Family: none) | 6,7,13,19 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>04 November 2015 (04.11.15) | Date of mailing of the international search report<br>17 November 2015 (17.11.15) |
|---|---|
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (July 2009)

**INTERNATIONAL SEARCH REPORT**

International application No.

PCT/JP2015/072972

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2002-13776 A (Sumitomo Realty & Development Co., Ltd.), 18 January 2002 (18.01.2002), paragraphs [0015] to [0041]; fig. 1 to 4 (Family: none) | 7 |

Form PCT/ISA/210 (continuation of second sheet) (July 2009)

**REFERENCES CITED IN THE DESCRIPTION**

**Patent documents cited in the description**

- JP S6350620 A

- JP 2012037222 A